# EUROPEAN PATENT APPLICATION

(11) **EP 4 616 931 A1**
(43) Date of publication of application: **17.09.2025**
(21) Application number: 24176301.0
(22) Date of filing: 16.05.2024
(51) Int. Cl.: B01F 23/231

(54) **DIFFUSER ASSEMBLY FOR USE IN WASTEWATER TREATMENT**

(30) Priority: 16.03.2024 US 202418607451
(71) Applicant: Frankel, Thomas Edward, Poughkeepsie, NY 12603 (US); Kang, Seoungil, Poughkeepsie, NY 12603 (US); Ritter, Todd David, Poughkeepsie, NY 12603 (US)
(72) Inventor: Frankel, Thomas Edward, Poughkeepsie, NY 12603 (US); Kang, Seoungil, Poughkeepsie, NY 12603 (US); Ritter, Todd David, Poughkeepsie, NY 12603 (US)
(74) Representative: Murgitroyd & Company

(57) **Abstract**

An exemplary wastewater treatment system includes a pipe, a diffuser mount (145), and four disc diffusers (150). The diffuser mount includes a mount-to-pipe connection portion (140) attached to the pipe, four distribution conduits (165) arranged in a cross shape and in gaseous communication with the mount-to-pipe connection portion, and four curved mount-to-diffuser attachment slots (170) located above the four distribution conduits. Each of the four disc diffusers occupies one of the four curved mount-to-diffuser attachment slots and is attached to one of the four distribution conduits. Configured in this manner, each of the four disc diffusers is in gaseous communication with an interior of the pipe and can be used to generate plumes of bubbles in wastewater for aerobic wastewater treatment applications.

## Description

### FIELD OF THE INVENTION

The present invention relates generally to wastewater treatment, and, more particularly, to assemblies for deploying disc diffusers in wastewater treatment systems.

### BACKGROUND OF THE INVENTION

Disc diffusers are a type of aerator that are used to increase the gas content of a liquid, typically oxygen in wastewater. A disc diffuser frequently includes a round, elastic, and porous diffuser membrane mounted on a rigid diffuser base. Compressed air is transported through pipes to the disc diffuser. As the compressed air enters the interior of the disc diffuser, the gas pressure inside the disc diffuser becomes higher than the pressure in the surrounding water. This causes the air to pass through the holes in the diffuser membrane into the water, forming a plume of small bubbles.

In many circumstances, utilizing a smaller-diameter disc diffuser is advantageous over utilizing a larger-diameter disc diffuser. When pressurized with air, the diffuser membrane of a smaller-diameter disc diffuser tends to deflect less than that in a larger-diameter disc diffuser, resulting in a more uniform distribution of air across the smaller disc diffuser. Moreover, utilizing a smaller-diameter disc diffuser has been demonstrated to reduce both spiral flow and compression in the rising column of bubbles, and to also reduce bubble coalescence. These reductions ultimately provide more efficient aeration.

For the foregoing reasons, there is a need for assemblies that allow large numbers of smaller-diameter disc diffusers to be both economically and efficiently installed in wastewater treatment tanks. Once placed, these assemblies need to be robust to withstand the harsh operating conditions of a wastewater treatment tank.

### SUMMARY OF THE INVENTION

Embodiments of the present invention address the above-identified need by providing assemblies that allow large numbers of smaller-diameter disc diffusers to be both economically and efficiently installed in wastewater treatment tanks.

Aspects of the invention are directed to a diffuser assembly comprising a diffuser mount and a plurality of disc diffusers. The diffuser mount comprises a mount-to-pipe connection portion adapted to attach to a pipe, a plurality of distribution conduits in gaseous communication with the mount-to-pipe connection portion, and a plurality of curved mount-to-diffuser attachment slots disposed above the plurality of distribution conduits. Each of the plurality of disc diffusers occupies a respective one of the plurality of curved mount-to-diffuser attachment slots and is attached to a respective one of the plurality of distribution conduits.

Additional aspects of the invention are directed to a wastewater treatment system comprising a pipe, a diffuser mount, and a plurality of disc diffusers. The diffuser mount comprises a mount-to-pipe connection portion attached to the pipe, a plurality of distribution conduits in gaseous communication with the mount-to-pipe connection portion, and a plurality of curved mount-to-diffuser attachment slots disposed above the plurality of distribution conduits. Each of the plurality of disc diffusers occupies a respective one of the plurality of curved mount-to-diffuser attachment slots and is attached to a respective one of the plurality of distribution conduits.

### BRIEF DESCRIPTION OF THE DRAWINGS

These and other features, aspects, and advantages of the present invention will become better understood with regard to the following description, appended claims, and accompanying drawings where:
FIG. 1 shows a perspective view of a wastewater treatment system in accordance with an illustrative embodiment of the invention while the wastewater treatment system is being used to aerate wastewater;
FIG. 2 shows an exploded perspective view of the diffuser assembly, the grommet, and the pipe in the FIG. 1 wastewater treatment system;
FIG. 3 shows a perspective view of the grommet in the FIG. 1 wastewater treatment system;
FIG. 4 shows a partially exploded perspective view of the diffuser assembly in the FIG. 1 wastewater treatment system;
FIG. 5 shows a top side view of the diffuser mount in the FIG. 1 wastewater treatment system;
FIG. 6 shows a bottom side view of the diffuser mount in the FIG. 1 wastewater treatment system;
FIG. 7 shows an end view of the diffuser mount in the FIG. 1 wastewater treatment system;
FIG. 8 shows a sectional view of the diffuser mount in the FIG. 1 wastewater treatment system along the cleave plane indicated in FIG. 5;
FIG. 9 shows an exploded perspective view of a disc diffuser and the diffuser mount in the FIG. 1 wastewater treatment system;
FIG. 10 shows a bottom side view of a disc diffuser in the FIG. 1 wastewater treatment system;
FIG. 11 shows a sectional view of a disc diffuser in the FIG. 1 wastewater treatment system along the cleave plane indicated in FIG. 9;
FIG. 12 shows a bottom side view of an attachment wedge in the FIG. 1 wastewater treatment system;
FIG. 13 shows a side view of an attachment wedge in the FIG. 1 wastewater treatment system;
FIG. 14 shows a partially exploded perspective view of the diffuser assembly in the FIG. 1 wastewater treatment system;
FIG. 15 shows a partially broken portion of the diffuser assembly in the FIG. 1 wastewater treatment system;
FIG. 16 shows a sectional view of the FIG. 1 wastewater treatment system along the cleave plane indicated in FIG. 1;
FIG. 17 shows a lower perspective view of an alternative diffuser mount in accordance with a second illustrative embodiment of the invention in association with a pipe; and
FIG. 18 shows a top side view of two adjacent alternative diffuser assemblies containing FIG. 17 alternative diffuser mounts mounted on a pipe.

### DETAILED DESCRIPTION OF THE INVENTION

The present invention will be described with reference to illustrative embodiments. For this reason, numerous modifications can be made to these embodiments and the results will still come within the scope of the invention. No limitations with respect to the specific embodiments described herein are intended or should be inferred.

As used herein and in the appended claims, "snap-fit attachment" means attachment by pushing interlocking components together and without use of adhesives or separate mechanical fasteners (e.g., screws or bolts). Arranged in a "cross shape" means arranged in a configuration resembling a plus sign. Two elements are "substantially identical" if they only differ from one another within commercially reasonable tolerances of manufacture and assembly.

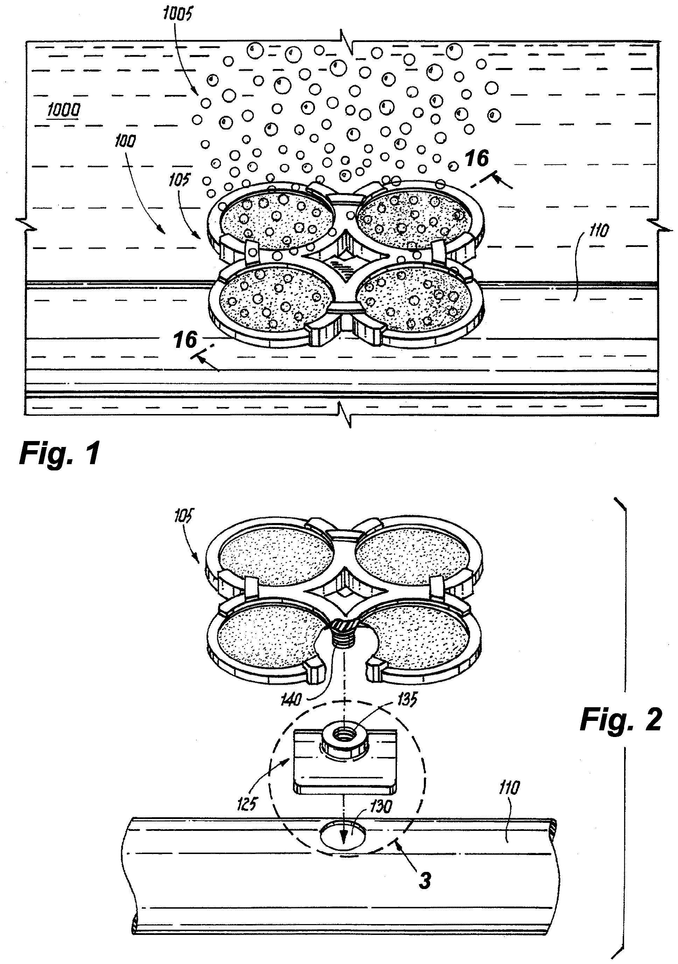

FIG. 1 shows a perspective view of a wastewater treatment system 100 in accordance with an illustrative embodiment of the invention while the wastewater treatment system 100 is being used to aerate wastewater 1000. The wastewater treatment system 100 includes a diffuser assembly 105 mounted to a pipe 110. The pipe 110 delivers air to the diffuser assembly 105, which, in turn, releases the air into the wastewater 1000 as plumes of bubbles 1005. Ultimately, the plumes of bubbles 1005 aerate the wastewater 1000 and, in so doing, support beneficial microbic processes occurring inside the wastewater 1000.

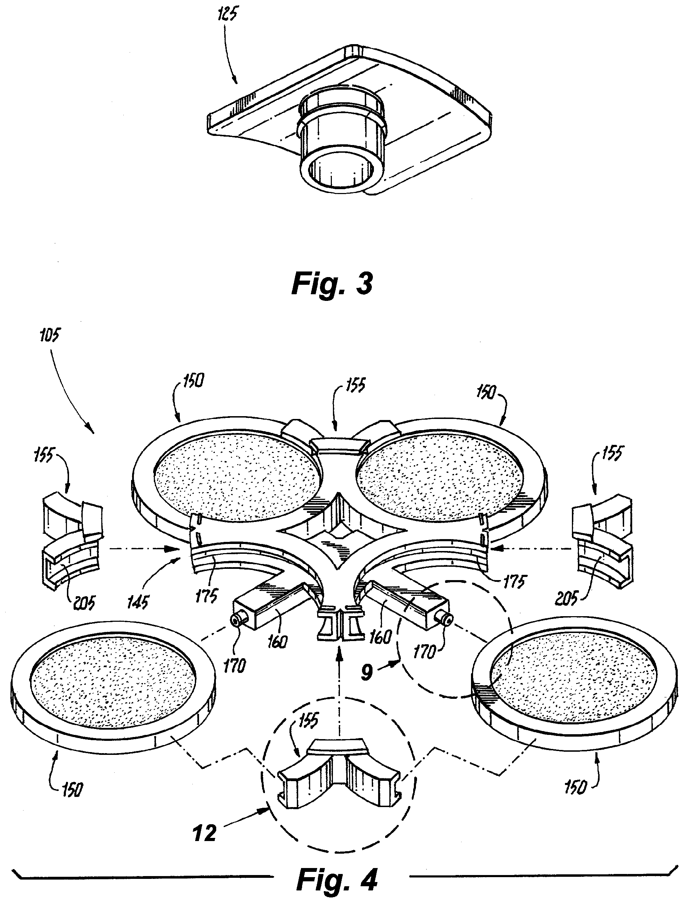

FIG. 2 shows an exploded perspective view of the diffuser assembly 105 and its relationship to the pipe 110. The diffuser assembly 105 is attached to the pipe 110 by a grommet 125, which is shown in isolation in perspective view in FIG. 3. The grommet 125 penetrates a hole 130 in the pipe 110 and, in the present illustrative embodiment, is held in place against the pipe 110 by interference fit and solvent welding. The grommet 125 defines an internally threaded channel 135. The diffuser assembly 105 defines a mount-to-pipe connection portion 140, which takes the form of an externally threaded pipe portion. The mount-to-pipe connection portion 140 threadably engages the grommet 125 to attach the diffuser assembly 105 to the pipe 110. The diffuser assembly 105 is thereby mounted on the pipe 110 and in gaseous communication with an interior of the pipe 110.

FIG. 4 shows a partially exploded perspective view of the diffuser assembly 105. The diffuser assembly 105 includes nine main components: a diffuser mount 145, four disc diffusers 150, and four attachment wedges 155. Each of these main components is now described in detail.

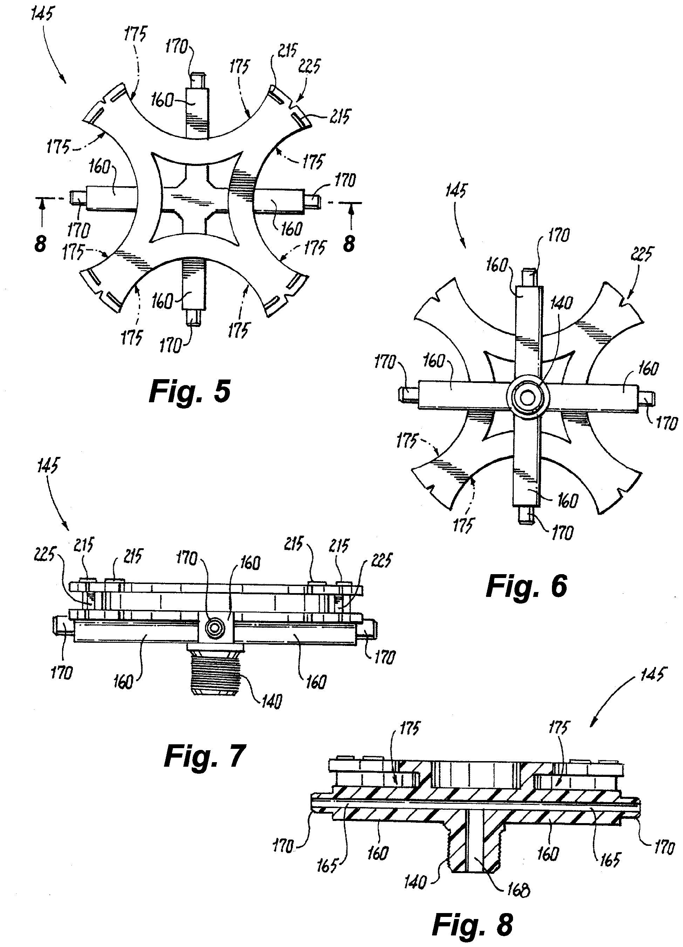

Aspects of the diffuser mount 145 are described in FIGS. 5-8, with FIG. 5 showing a top side view of the diffuser mount 145, FIG. 6 showing a bottom side view, FIG. 7 showing an end view, and FIG. 8 showing a sectional view along the cleave plane indicated in FIG. 5. The diffuser mount 145 defines three tiers. The mount-to-pipe connection portion 140 occupies the lowest tier, and four air distribution arms 160 occupy the middle tier. The four air distribution arms 160 internally define four distribution conduits 165, which are arranged in a cross shape with the mount-to-pipe connection portion 140 at their center. The inside end of each of the four distribution conduits 165 merges with an interior channel 168 of the mount-to-pipe connection portion 140, and the outside end of each of the four distribution conduits 165 terminates in one of four output nipples 170. The highest tier of the diffuser mount 145 defines four curved mount-to-diffuser attachment slots 175, which are disposed above the four air distribution arms 160 and their four distribution conduits 165.

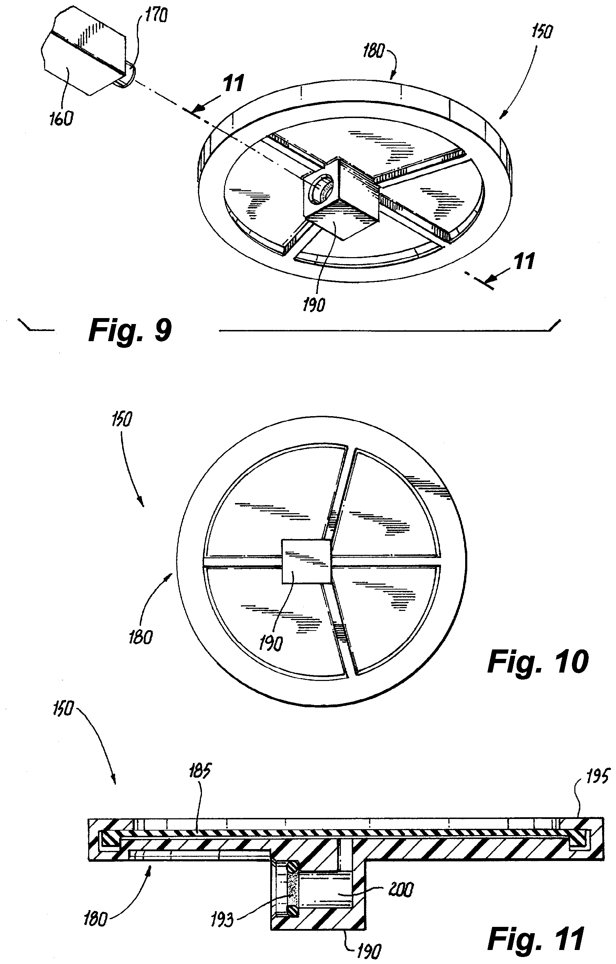

Aspects of the four disc diffusers 150 and how they relate to the diffuser mount 145 are shown in FIGS. 9-11, with FIG. 9 showing an exploded perspective view of a representative one of the four disc diffusers 150 and how it attaches to the diffuser mount 145, FIG. 10 showing a bottom side view of the disc diffuser 150, and FIG. 11 showing a sectional view of the disc diffuser 150 along the cleave plane indicated in FIG. 9.

Each of the four disc diffusers 150 comprises a diffuser body 180 and a diffuser membrane 185. The undersides of the diffuser bodies 180 define input receptacles 190, which are adapted for airtight attachment to the four output nipples 170 on the diffuser mount 145. Rubber O-rings 193 inside the input receptacles 190 aid with the airtight seal. The tops of the diffuser bodies 180 define retention rings 195, which retain the diffuser membranes 185 to the diffuser bodies 180. Diffuser channels 200 inside the diffuser bodies 180 provide passageways from the input receptacles 190 to just underneath the diffuser membranes 185.

With the diffuser assembly 105 fully assembled as indicated in FIG. 4, the four disc diffusers 150 occupy the four curved mount-to-diffuser attachment slots 175 of the diffuser mount 145. At the same time, the input receptacles 190 of the four disc diffusers 150 are coupled to the four output nipples 170 of the diffuser mount 145. The four attachment wedges 155 act to hold the four disc diffusers 150 against the diffuser mount 145. The four disc diffusers 150 are arranged in a square in plan view.

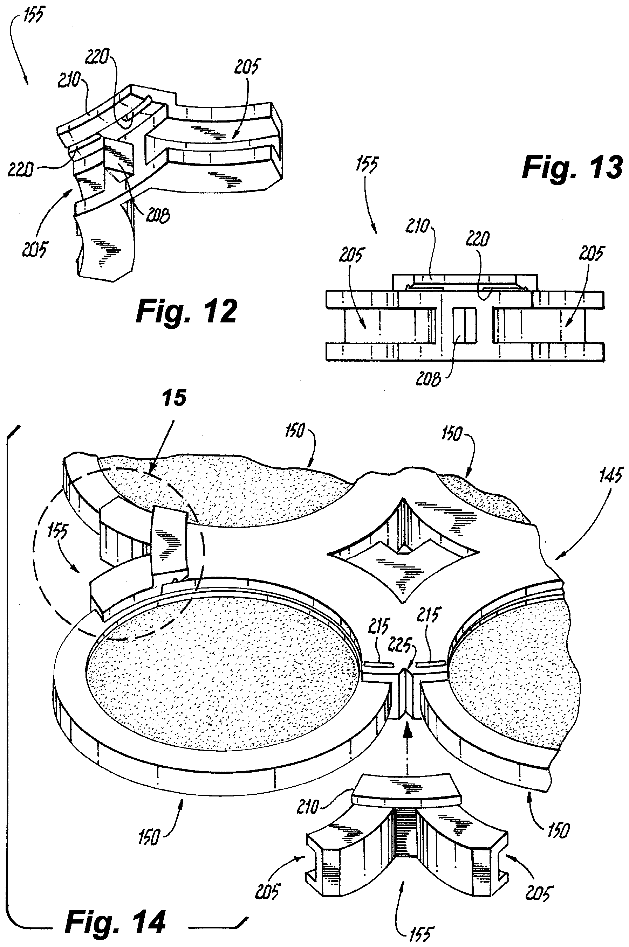

Aspects of the four attachment wedges 155 are shown in FIGS. 12 and 13. FIG. 12 shows a bottom side view of a representative one of the four attachment wedges 155, while FIG. 13 shows a side view. Each of the four attachment wedges 155 defines a pair of curved wedge-to-diffuser attachment slots 205, which are arranged on the attachment wedges 155 as mirror images of one another. With each of the four attachment wedges 155 defining a pair of curved wedge-to-diffuser attachment slots 205, the four attachment wedges 155 act to define eight curved wedge-to-diffuser attachment slots 205 in total. Each of the four attachment wedges 155 also defines a triangular projection 208 and a cantilevered tab 210.

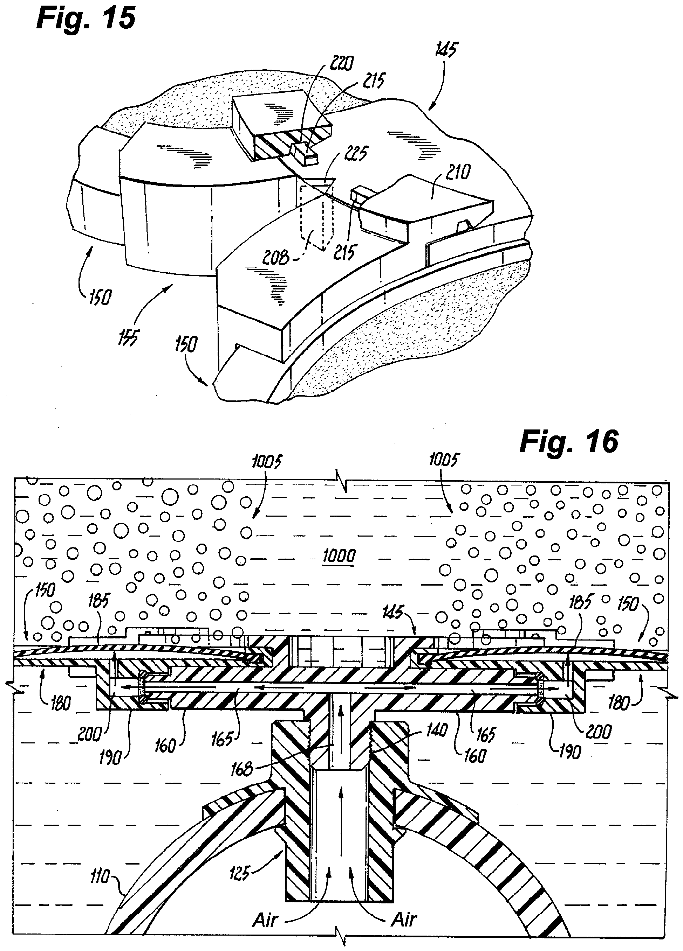

The four attachment wedges 155 hold the four disc diffusers 150 against the diffuser mount 145 by snapping onto the diffuser mount 145. That is, the four attachment wedges 155 are attached to the diffuser mount 145 via snap-fit attachment by pushing interlocking components of the four attachment wedges 155 and the diffuser mount 145 together. No adhesives or separate mechanical fasteners (e.g., screws or bolts) are required. The snap-fit attachment of the four attachment wedges 155 to the diffuser mount 145 is detailed in FIGS. 14 and 15, where FIG. 14 shows a partially exploded perspective view of the diffuser assembly 105, and FIG. 15 shows a partially broken perspective view. of the region denoted in FIG. 14. In the embodiment shown in the present figures, the diffuser mount 145 defines several ridges 215 and the cantilevered tabs 210 define several complementary recesses 220. When pressed onto the diffuser mount 145 with the four disc diffusers 150 in place, the ridges 215 on the diffuser mount 145 engage the recesses 220 on the four attachment wedges 155 to lock these elements together. At the same time, the triangular projections 208 on the four attachment wedges 155 engage complementary triangular notches 225 in the diffuser mount 145. In alternative embodiments, a similar snap-fit attachment is achieved by having the diffuser mount 145 define the recesses and having the four attachment wedges 155 define the ridges.

As indicated above with reference to FIG. 1, the wastewater treatment system 100 may be used to aerate wastewater. FIG. 16 shows a sectional view of the wastewater treatment system 100 along the cleave plane indicated in FIG. 1 and provides an overview of how the wastewater treatment system 100 functions when immersed in the wastewater 1000 and provided with compressed air via the pipe 110. The air passes down the pipe 110 and enters the diffuser assembly 105 via the mount-to-pipe connection portion 140 with its interior channel 168. The four air distribution arms 160 with their four distribution conduits 165 then transport the air to the four disc diffusers 150. The diffuser channels 200 in each of the four disc diffusers 150 next transport the air to underneath their diffuser membranes 185. This air causes the diffuser membranes 185 to bulge somewhat and to release the air through their small perforations into the wastewater 1000 as plumes of bubbles 1005. If the air is later shut off, the diffuser membranes 185 again relax against their diffuser bodies 180. Because the diffuser membranes 185 are purposefully designed to not have any perforations in their center regions overlying the diffuser channels 200, the relaxed diffuser membranes 185 stop water from entering the diffuser channels 200 and flooding the wastewater treatment system 100.

In summary, the illustrative wastewater treatment system 100 set forth above includes a pipe 110, a diffuser mount 145, four disc diffusers 150, and four attachment wedges 155. The diffuser mount 145 includes a mount-to-pipe connection portion 140 attached to the pipe 110, four distribution conduits 165 arranged in a cross shape and in gaseous communication with the mount-to-pipe connection portion 140, and four curved mount-to-diffuser attachment slots 175 disposed above the four distribution conduits. 165. Each of the four disc diffusers 150 occupies a respective one of the four curved mount-to-diffuser attachment slots 175 and is attached to a respective one of the four distribution conduits 165. The four attachment wedges 155 act to hold the four disc diffusers 150 against the diffuser mount 145. Configured in this manner, each of the four disc diffusers 150 is in gaseous communication with an interior of the pipe 110. Immersing the wastewater treatment system 100 in the wastewater 1000 and providing air to the pipe 110 causes the four disc diffusers 150 to release the air into the wastewater 1000 as bubbles 1005.

Utilizing a smaller-diameter disc diffuser may be advantageous over utilizing a larger-diameter disc diffuser. The present inventors have surprisingly determined, for example, that 7-inch (18-centimeter (cm)) diameter disc diffusers often outperform 9-inch (23-cm) disc diffusers, and 9-inch (23-cm) disc diffusers often outperform 12-inch (30-cm) disc diffusers, at the same flux rate in terms of aerating wastewater. When pressurized with air, the diffuser membrane of a smaller-diameter disc diffuser tends to deflect less than that in a larger-diameter disc diffuser, resulting in a more uniform distribution of air across the smaller disc diffuser. Moreover, utilizing a smaller-diameter disc diffuser has been demonstrated to reduce both spiral flow and compression in the rising column of bubbles, and to also reduce bubble coalescence. These reductions ultimately provide more efficient aeration. Accordingly, use of disc diffusers with smaller diameters (e.g., less than 9 inches (23 cm)) is generally preferred when implementing aspects of the invention, although this is solely a preference and should not be considered a limitation on the scope of the invention.

The composition and manufacture of the various components of the diffuser assembly 105 will be familiar to one having ordinary skill in the art after reading the description provided herein. The diffuser mount 145 and the four attachment wedges 155 may be formed of plastic and may be manufactured by conventional plastic manufacturing techniques such as injection molding. The diffuser bodies 180 of the four disc diffusers 150 may also be formed of plastic, while the diffuser membranes 185 may be formed of a synthetic rubber. In one or more embodiments, the four disc diffusers 150 may be formed by injection molding the diffuser bodies 180 around the diffuser membranes 185 with the diffuser membranes 185 in place. Such an "integrated" manufacturing technique is described in, for example, US Patent No. 10,773,982, entitled "Diffuser Assembly" to Frankel et al., which is hereby incorporated by reference herein. A suitable grommet can be obtained commercially from, for example, Stamford Scientific International, Inc. (Poughkeepsie, NY, US).

Advantageously, embodiments in accordance with aspects of the invention, such as the illustrative wastewater treatment system 100, allow large numbers of smaller-diameter disc diffusers (e.g., 7-inch (18-cm) disc diffusers) to be both economically and efficiently installed in wastewater treatment tanks in place of smaller numbers of larger-diameter disc diffusers. With the diffuser mount 145, the four disc diffusers 150 can be attached to a pipe via a single grommet 125. Placement of the four disc diffusers 150 on the diffuser mount 145 is via simple snap-fit attachment using the four attachment wedges 155. No specialized tools or fasteners are required for the installation, and the installation can be accomplished without the need for specialized skills or training. At the same time, the number of components required for the wastewater treatment system 100 are limited, and the components can be obtained commercially or via conventional manufacturing techniques without the use of exotic materials. Once placed, the wastewater treatment system 100 is robust and able to withstand the harsh operating conditions of a wastewater treatment tank.

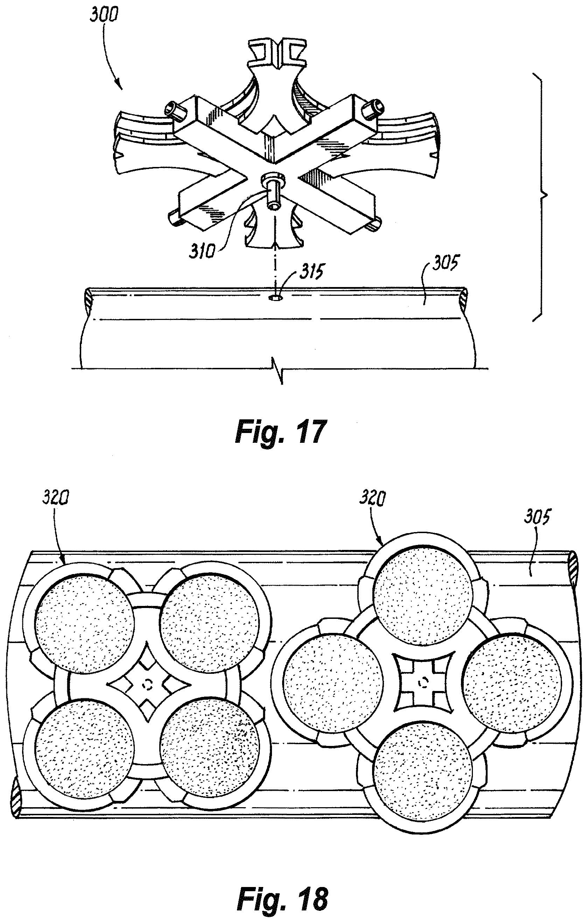

A diffuser assembly like the diffuser assembly 105 may benefit from a differently configured mount-to-pipe connection portion than that described above (i.e., one different from the mount-to-pipe connection portion 140). FIG. 17 shows a lower perspective view of an alternative diffuser mount 300 in accordance with a second illustrative embodiment of the invention in association with a pipe 305. The alternative diffuser mount 300 includes an alternative mount-to-pipe connection portion 310 but is otherwise like the diffuser mount 145. The alternative mount-to-pipe connection portion 310 takes the form of an unthreaded shaft with a chamfered end. To mount the alternative diffuser mount 300 to the pipe 305, a hole 315 with a diameter slightly smaller than the alternative mount-to-pipe connection portion 310 is first drilled into the pipe 305. Subsequently, the alternative mount-to-pipe connection portion 310 is forced into the hole 315 to form a tight interference-fit attachment. A hydraulic ram or similar may be used to achieve the mounting. Such attachment may occur at the place of manufacture or in the field.

The alternative mount-to-pipe connection portion 310 permits the alternative diffuser mount 300 to be mounted to the pipe 305 with varying orientations relative to the pipe 305. FIG. 18 shows a top side view of two adjacent alternative diffuser assemblies 320 mounted on the pipe 305. Each of the two alternative diffuser assemblies 320 includes an alternative diffuser mount 300 but is otherwise like the diffuser assembly 105. In this particular example, the two adjacent alternative diffuser assemblies 320 differ in orientation relative to the pipe 305 by about forty-five degrees. This difference in orientation allows the alternative diffuser assemblies 320 to nest somewhat so that the two alternative diffuser assemblies 320 can be placed into close proximity to one another. It is contemplated that a plurality of such alternative diffuser assemblies 320 could be attached to the pipe 305 with such an alternating pattern of orientations to achieve a very high coverage of diffusers along the pipe 305. If extremely high coverage is desired, alternative diffuser assemblies 320 on one pipe may even be made to nest with alternative diffuser assemblies 320 on a neighboring pipe.

It should again be emphasized that the above-described embodiments of the invention are intended to be illustrative only. Other embodiments can use different types and arrangements of elements for implementing the described functionality. These numerous alternative embodiments within the scope of the appended claims will be apparent to one skilled in the art. The spirit and scope of the appended claims should not be limited solely to the description of the preferred embodiments contained herein.

For example, a suitable diffuser mount may have a design substantially different from that described herein with reference to diffuser mount 145 and still fall within the scope of the invention. In the diffuser mount 145, the four distribution conduits 165 occupy four air distribution arms 160 that are arranged in a cross shape (*see*, *for example,* FIG. 6). In one or more alternative embodiments, these four air distribution arms 160 may be replaced with a differently shaped body that still contains the four distribution conduits 165. Such a differently shaped body could, as just one example, appear square or round when considered in a bottom side view like that presented in FIG. 6. Such an embodiment would still fall within the scope of the invention.

Moreover, a diffuser mount in accordance with the claims herein may accommodate fewer or greater than four disc diffusers. A diffuser mount in accordance with scope of the invention may, for example, accommodate two, three, five, or six disc diffusers.

All the features disclosed herein may be replaced by alternative features serving the same, equivalent, or similar purposes, unless expressly stated otherwise. Thus, unless expressly stated otherwise, each feature disclosed is one example only of a generic series of equivalent or similar features.

## Claims

1. A diffuser assembly comprising:
a diffuser mount comprising:
a mount-to-pipe connection portion adapted to attach to a pipe;
a plurality of distribution conduits in gaseous communication with the mount-to-pipe connection portion; and
a plurality of curved mount-to-diffuser attachment slots disposed above the plurality of distribution conduits; and
a plurality of disc diffusers, each occupying a respective one of the plurality of curved mount-to-diffuser attachment slots and attached to a respective one of the plurality of distribution conduits.

2. The diffuser assembly of claim 1, wherein the mount-to-pipe connection portion defines an externally threaded pipe portion, or the mount-to-pipe connection portion defines an unthreaded shaft.

3. The diffuser assembly of claim 1 or 2, wherein the mount-to-pipe connection portion is disposed at a center of the plurality of distribution conduits.

4. The diffuser assembly of claim 1, 2 or 3, wherein the plurality of distribution conduits are arranged in a cross shape.

5. The diffuser assembly of any of the preceding claims, wherein the plurality of disc diffusers consists of four disc diffusers arranged in a square in plan view.

6. The diffuser assembly of any of the preceding claims, wherein each of the plurality of disc diffusers comprises:
a respective diffuser body; and
a respective diffuser membrane mounted on the respective diffuser body.

7. The diffuser assembly of any of the preceding claims, wherein each of the plurality of distribution conduits terminates in a respective one of a plurality of output nipples, wherein, optionally, each of the plurality of disc diffusers defines a respective input receptacle coupled to a respective one of the plurality of output nipples.

8. The diffuser assembly of any of the preceding claims, further comprising a plurality of air distribution arms containing the plurality of distribution conduits and arranged in a cross shape.

9. The diffuser assembly of any of the preceding claims, further comprising a plurality of attachment wedges defining a plurality of curved wedge-to-diffuser attachment slots, the plurality of attachment wedges hold the plurality of disc diffusers against the diffuser mount with the plurality of disc diffusers occupying the plurality of curved wedge-to-diffuser attachment slots.

10. The diffuser assembly of claim 9, wherein each of the plurality of attachment wedges defines a respective pair of the plurality of curved wedge-to-diffuser attachment slots arranged as mirror images to each other, and/or the plurality of attachment wedges are attached to the diffuser mount via snap-fit attachment.

11. The diffuser assembly of claim 9 or 10, wherein:
the diffuser mount defines a plurality of ridges or a plurality of recesses; and
if the diffuser mount defines a plurality of ridges, the plurality of attachment wedges define a plurality of recesses engaging the plurality of ridges;
if the diffuser mount defines a plurality of recesses, the plurality of attachment wedges define a plurality of ridges engaging the plurality of recesses.

12. A wastewater treatment system comprising:
a pipe; and
the diffuser assembly of any of the preceding claims.

13. The wastewater treatment system of claim 12, further comprising a grommet defining internal threads, wherein:
the pipe defines a hole;
the grommet penetrates the hole; and
the mount-to-pipe connection portion defines an externally threaded pipe portion, which threadably engages the grommet to attach the mount-to-pipe connection portion to the pipe.

14. The wastewater treatment system of claim 12 or 13, wherein:
the wastewater treatment system is immersed in wastewater;
the pipe provides air; and
the plurality of disc diffusers release the air into the wastewater as bubbles.

15. The wastewater treatment system of claim 12, 13 or 14, further comprising a second diffuser mount substantially identical to the diffuser mount, the second diffuser mount attached to the pipe with a different orientation relative to the pipe than the diffuser mount.
